# EUROPÄISCHE PATENTANMELDUNG

(11) **EP 2 335 896 A1**
(43) Veröffentlichungstag der Anmeldung: **22.06.2011**
(21) Anmeldenummer: 10193229.1
(22) Anmeldetag: 01.12.2010
(51) Int. Cl.: B28D 7/02

(54) **Vorrichtung zur Aufbereitung einer Kühl- und Spülflüssigkeit**

(30) Priorität: 18.12.2009 DE 102009055011
(71) Anmelder: HILTI Aktiengesellschaft, 9494 Schaan (LI)
(72) Erfinder: Burkhard, Andreas, 86830, Schwabmünchen (DE); Holzmeier, Georg, 86836, Untermeitingen (DE); Schuster, Marc, 76131, Karlsruhe (DE)

(57) **Zusammenfassung**

Vorrichtung (2) zur Aufbereitung einer Kühl- und Spülflüssigkeit aus einer Schmutzflüssigkeit (15) mit einem ersten Behälter (20), der mit einer Absaugeinrichtung (24) für die Schmutzflüssigkeit (15) zusammenwirkt und die abgesaugte Schmutzflüssigkeit (15) sammelt, einem zweiten Behälter (21), der mit einer Überdruckeinrichtung (32) zusammenwirkt, und einem Filterelement (30), das in dem zweiten Behälter (21) angeordnet ist, wobei das Filterelement (30) in einer Strömungsrichtung (33) vor dem zweiten Behälter (21) angeordnet ist.

## Beschreibung

Die vorliegende Erfindung betrifft eine Vorrichtung zur Aufbereitung einer Kühl- und Spülflüssigkeit gemäß dem Oberbegriff des Anspruchs 1.

Bei der abrasiv abtragenden Bearbeitung mit Diamantwerkzeugen, beispielsweise in Form von Diamantbohrkronen oder Diamantsägen, ist es erforderlich, das Diamantwerkzeug im Bereich der Bearbeitungsstelle zu kühlen, um eine Beschädigung des Diamantwerkzeuges durch eine Überhitzung zu vermeiden. Die Schneidsegmente der Diamantwerkzeuge werden während des Bearbeitungsvorgangs mittels einer Kühlflüssigkeit gekühlt, um den Bearbeitungsvorgang zu unterstützen und die Lebensdauer der Schneidsegmente zu erhöhen. Die Flüssigkeit dient außerdem dazu, die von dem Diamantwerkzeug abgetragenen Feststoffe von der Bearbeitungsstelle zu entfernen. Die zugeführte Flüssigkeit wird als Kühl- und Spülflüssigkeit und die mit Feststoffen versetzte Flüssigkeit als Schmutzflüssigkeit bezeichnet.

EP 0 941 828 B1 offenbart eine bekannte Aufbereitungsvorrichtung zum Aufbereiten einer Kühl- und Spülflüssigkeit aus einer Schmutzflüssigkeit und zum Zuführen der recycelten Kühl- und Spülflüssigkeit zu einem Werkzeuggerät, beispielsweise einem Kernbohrgerät. Die Aufbereitungsvorrichtung umfasst zwei luft- und flüssigkeitsdicht abgeschlossene Behälter. Im Betrieb sind der erste Behälter mittels einer Unterdruckeinrichtung als Unterdruckbehälter und der zweite Behälter mittels einer Überdruckeinrichtung als Überdruckbehälter ausgebildet. Der Unterdruckbehälter ist über eine Verbindungsleitung mit dem Überdruckbehälter verbunden. Mit Hilfe der Unterdruckeinrichtung wird die Schmutzflüssigkeit über eine Zuführleitung in den Unterdruckbehälter gesaugt, der außerdem zur Vorreinigung der Schmutzflüssigkeit dient. Die Überdruckeinrichtung, die in der Verbindungsleitung angeordnet ist, befördert die vorgereinigte Schmutzflüssigkeit aus dem Unterdruckbehälter über die Verbindungsleitung in den Überdruckbehälter. Am Deckel des Überdruckbehälters befindet sich ein Filterelement, das mit einer Außenseite mit der vorgereinigten Schmutzflüssigkeit in Kontakt steht. Aufgrund des Überdrucks strömt die vorgereinigte Schmutzflüssigkeit in das Innere des Filterelementes. In der vorgereinigten Schmutzflüssigkeit vorhandene Feststoffe bleiben im Filterelement hängen. Im Inneren des Filterelementes sammelt sich recycelte Kühl- und Spülflüssigkeit, die dem Werkzeuggerät zugeführt werden kann. Die recycelte Kühl- und Spülflüssigkeit strömt aufgrund des Überdruckes über eine Versorgungsleitung zum Werkzeuggerät.

Die Bedienung der bekannten Aufbereitungsvorrichtung sieht vor, dass vor jeder längeren Arbeitspause und nach Beendigung eines Arbeitstages die Behälter zu reinigen sind und das Filterelement zu regenerieren ist. Das Filterelement ist aus Haltbarkeitsgründen als Keramikkörper ausgebildet und wird mit einem Reinigungspad unter fließendem Wasser abgeschmirgelt, bis der Keramikkörper zum Vorschein kommt. Dieser Regenerationsvorgang wird solange wiederholt, bis die minimale Wandstärke des Keramikkörpers erreicht ist.

Die bekannte Aufbereitungsvorrichtung weist den Nachteil auf, dass der Bediener beim Reinigen und Regenerieren des Keramikfilters mit den Feststoffen der Schmutzflüssigkeit und der recycelten Kühl- und Spülflüssigkeit, die beim Bediener Reizungen verursachen können, in Kontakt kommt.

Die Aufgabe der vorliegenden Erfindung besteht demgegenüber darin, die bekannte Aufbereitungsvorrichtung dahingehend weiterzuentwickeln, dass der Kontakt des Bedieners mit Feststoffen der Schmutzflüssigkeit und recycelter Kühl- und Spülflüssigkeit reduziert ist.

Diese Aufgabe wird bei der eingangs genannten Aufbereitungsvorrichtung erfindungsgemäß durch die Merkmale des unabhängigen Anspruchs gelöst. Vorteilhafte Ausgestaltungen ergeben sich aus den abhängigen Ansprüchen.

Es wird eine Vorrichtung zur Aufbereitung einer Kühl- und Spülflüssigkeit aus einer Schmutzflüssigkeit mit einem ersten Behälter, der mit einer Absaugeinrichtung für die Schmutzflüssigkeit zusammenwirkt und die abgesaugte Schmutzflüssigkeit sammelt, einem zweiten Behälter, der mit einer Überdruckeinrichtung zusammenwirkt, und einem Filterelement, das in dem zweiten Behälter angeordnet ist, vorgeschlagen.

Erfindungsgemäß ist das Filterelement in einer Strömungsrichtung vor dem zweiten Behälter angeordnet. Besonders bevorzugt ist eine Verbindungsleitung vorgesehen, die den ersten Behälter mit dem Filterelement verbindet. Die mit Feststoffen versetzte Schmutzflüssigkeit wird über die Verbindungsleitung in das Filterelement befördert. Feststoffe bleiben im Filterelement hängen, so dass sich ein Grossteil der Feststoffe im Innenraum des Filterelementes befindet.

In einer bevorzugten Ausführung ist das Filterelement zylinderförmig mit einem Boden, einer Mantelfläche und einem Deckel ausgebildet, wobei in der Mantelfläche zumindest eine Filterfläche vorgesehen ist. Besonders bevorzugt ist der Deckel unverlierbar mit der Mantelfläche verbunden. Dadurch, dass der Innenraum des Filterelementes für den Bediener nicht zugänglich ist, kommt der Bediener nicht in Kontakt mit den Feststoffen, die sich im Innenraum des Filterelementes befinden.

In einer bevorzugten Ausführung ist das Filterelement als einteiliges Spritzgussteil, das um die Filterfläche herum gespritzt wurde, ausgebildet. Diese Art der Herstellung ist kostengünstig und daher vor allem für Filterelemente geeignet, die als Einweg-Hilfsmittel eingesetzt werden und nach dem Einsatz entsorgt werden.

In einer bevorzugten Ausführung ist das Filterelement mittels einer Halteinrichtung mechanisch am zweiten Behälter abgestützt. Dabei ist die Halteinrichtung besonders bevorzugt als Stützkörper, der mit dem zweiten Behälter verbunden ist, ausgebildet. Die Halteeinrichtung sorgt dafür, dass das Filterelement mechanisch stabil ist und nicht unter dem Überdruck der Überdruckeinrichtung verformt wird.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- **Fig. 1**: ein Kernbohrgerät mit einer erfindungsgemäßen Aufbereitungsvorrichtung zur Aufbereitung einer Kühl- und Spülflüssigkeit aus einer Schmutzflüssigkeit mit einem Filterelement, das in Strömungsrichtung vor dem zweiten Behälter angeordnet ist; und
- **Fig. 2**: eine Ausführungsform des Filterelementes der in Fig. **1** gezeigten erfindungsgemäßen Aufbereitungsvorrichtung.

Gleiche oder funktionsgleiche Elemente werden durch gleiche Bezugszeichen in den Figuren indiziert, soweit nicht anders angegeben.

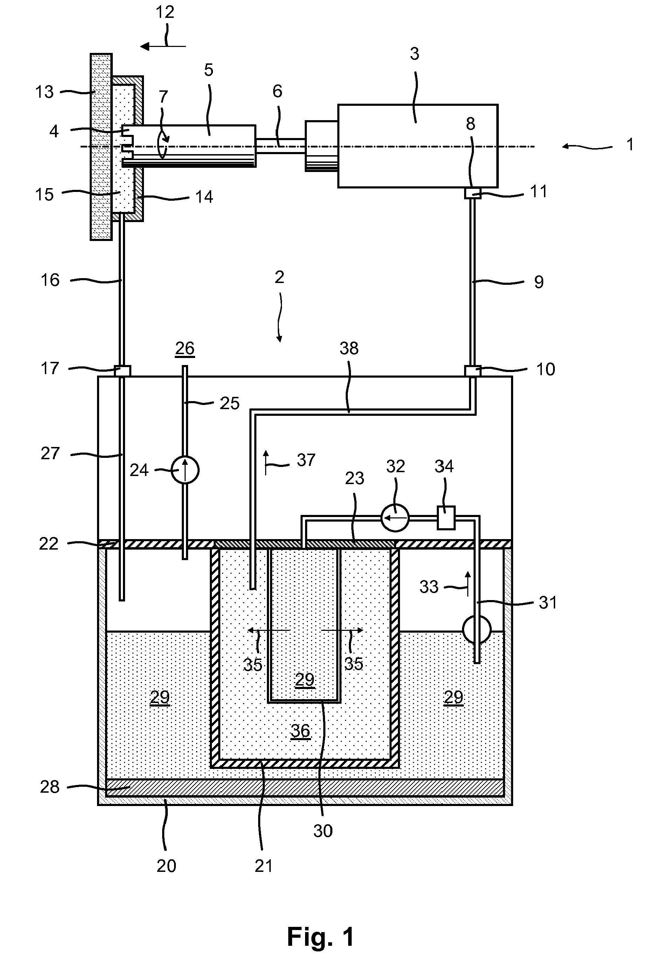

Das in **Fig. 1** gezeigte Werkzeuggerät ist als Kernbohrgerät **1** ausgebildet und mit einer erfindungsgemäßen Aufbereitungsvorrichtung 2 zur Aufbereitung einer Kühl- und Spülflüssigkeit verbunden.

Das Kernbohrgerät 1 umfasst eine Maschineneinheit **3**, die eine mit Schneidsegmenten **4** besetzte Bohrkrone **5** um eine Drehachse **6** in eine Drehrichtung **7** antreibt. Die Kühl- und Spülflüssigkeit wird über eine Einlassöffnung **8** der Maschineneinheit 3 zugeführt. Die Einlassöffnung 8 ist über eine Versorgungsleitung **9** mit einem Ausgangsstutzen **10** der Aufbereitungsvorrichtung 2 verbunden. Alternativ kann die Kühl- und Spülflüssigkeit einem Saug- bzw. Spülkopf zugeführt werden, der in Strömungsrichtung hinter der Maschineneinheit 3 angeordnet ist.

Über eine Reguliereinrichtung **11**, die mit der Einlassöffnung 8 der Maschineneinheit 3 verbunden ist und die von einem Bediener manuell bedient wird, ist der Durchfluss der Kühl-und Spülflüssigkeit in die Maschineneinheit 3 einstellbar. Dabei ist die Reguliereinrichtung 11 als Absperreinrichtung ausgebildet und zwischen einer offenen Stellung, in der die Kühl- und Spülflüssigkeit in die Maschineneinheit 3 strömen kann, und einer geschlossenen Stellung, in der der Zufluss der Kühl- und Spülflüssigkeit zur Maschineneinheit 3 unterbrochen ist, verstellbar. Alternativ kann die Reguliereinrichtung 11 eine diskrete oder kontinuierliche Einstellung des Durchflusses der Kühl- und Spülflüssigkeit zwischen 0 % (geschlossene Stellung) und 100 % (offene Stellung) ermöglichen.

Im Bohrbetrieb, d.h. während die Bohrkrone 5 um die Drehachse 6 angetrieben wird und die Schneidsegmente 4 in einer Bohrrichtung **12** in einen zu bearbeitenden Untergrund **13** eindringen, wird die Bohrkrone 5 mittels der Kühl- und Spülflüssigkeit gespült und im Bereich der Bearbeitungsstelle gekühlt. Auf dem zu bearbeitenden Untergrund 13 ist eine Auffangeinrichtung **14** angeordnet, die die Bearbeitungsstelle umgibt und eine erwärmte und mit Feststoffen versetzte Kühl- und Spülflüssigkeit, die als Schmutzflüssigkeit **15** bezeichnet wird, auffängt. Die Auffangeinrichtung 14 ist über eine Absaugleitung **16** an einen Eingangsstutzen **17** der Aufbereitungsvorrichtung 2 angeschlossen.

Die Aufbereitungsvorrichtung 2 umfasst einen ersten und zweiten Behälter **20**, **21**. Um die Aufbereitungsvorrichtung 2 kompakt auszubilden, ist der zweite Behälter 21 im ersten Behälter 20 angeordnet und beide Behälter 20, 21 sind jeweils über einen Deckel **22**, **23** luft- und flüssigkeitsdicht abgeschlossen. Alternativ können die beiden Behälter 20, 21 nebeneinander angeordnet sein.

Der erste Behälter 20 wirkt im Bohrbetrieb mit einer Absaugeinrichtung **24**, die die Schmutzflüssigkeit 15 aus der Auffangeinrichtung 14 in den ersten Behälter 20 befördert, zusammen. Die Absaugeinrichtung 24 als beispielsweise als Einrichtung zur Erzeugung eines Unterdrucks, die im Folgenden als Unterdruckeinrichtung bezeichnet wird, ausgebildet und der erste Behälter 20 wird auch als Unterdruckbehälter bezeichnet. Die Unterdruckeinrichtung 24 ist in einer Saugleitung **25** angeordnet, die mit einem Ende in den Unterdruckbehälter 20 mündet und mit einem anderen Ende an eine Atmosphäre **26** angeschlossen ist. Durch den Unterdruck, der im Unterdruckbehälter 20 gegenüber der Auffangeinrichtung 14 herrscht, wird die Schmutzflüssigkeit 15 über die Absaugleitung 16 und eine Zuführleitung **27**, die mit einem Ende an den Eingangsstutzen 17 der Aufbereitungsvorrichtung 2 angeschlossen ist und mit einem anderen Ende in den Unterdruckbehälter 20 mündet, in den Unterdruckbehälter 20 befördert.

Der Unterdruckbehälter 20 dient zusätzlich zur Vorreinigung der Schmutzflüssigkeit 15. Durch die Schwerkraft setzen sich Feststoffe, die durch das abgetragene Material des Untergrundes 13 in der Schmutzflüssigkeit 15 vorhanden sind, am Boden des Unterdruckbehälters 20 als abgesetzte Feststoffe **28** ab. Oberhalb der abgesetzten Feststoffe 28 befindet sich eine vorgereinigte Schmutzflüssigkeit **29**.

Im zweiten Behälter 21 ist ein Filterelement **30** angeordnet, das über eine Verbindungsleitung **31** mit dem Unterdruckbehälter 20 verbunden ist. Damit die durch die Schwerkraft bereits abgesetzten Feststoffe 28 nicht in das Filterelement 30 gelangen, ist der in den Unterdruckbehälter 20 ragende Teil der Verbindungsleitung 31 als vom Boden des Unterdruckbehälters 20 beabstandete Steigleitung ausgebildet. In der Verbindungsleitung 31 ist eine Einrichtung zur Erzeugung eines Überdruckes **32**, die im Folgenden als Überdruckeinrichtung bezeichnet wird und beispielsweise als Druckpumpe ausgebildet ist, angeordnet. Die Überdruckeinrichtung 32 erzeugt beispielsweise einen Überdruck, der zwischen 1 und 6 bar beträgt. Der zweite Behälter 21 wird auch als Überdruckbehälter bezeichnet.

Durch den Überdruck strömt die vorgereinigte Schmutzflüssigkeit 29 über die Verbindungsleitung 31 aus dem Unterdruckbehälter 20 in das Filterelement 30. In der Verbindungsleitung 31 befindet sich in einer Strömungsrichtung **33** vor der Überdruckeinrichtung 32 ein Rückschlagventil **34**, das verhindert, dass die vorgereinigte Schmutzflüssigkeit 29 in den Unterdruckbehälter 20 zurückströmt.

Aufgrund des Überdruckes in dem Filterelement 30 strömt die vorgereinigte Schmutzflüssigkeit 29 durch das Filterelement 30 in einer Strömungsrichtung **35** in den Überdruckbehälter 21. Feststoffe, die in der vorgereinigten Schmutzflüssigkeit 29 enthalten sind, lagern sich aufgrund der Schwerkraft am Boden des Filterelementes 30 ab oder bleiben im Filterelement 30 hängen. Im Überdruckbehälter 21 sammelt sich recycelte Kühl- und Spülflüssigkeit **36**, die dem Kernbohrgerät 1 zugeführt werden kann, so dass der Kreislauf geschlossen ist. Die recycelte Kühl- und Spülflüssigkeit 36 strömt aufgrund der Druckdifferenz in einer Strömungsrichtung **37** über eine Abführleitung **38**, die mit einem Ende in den Überdruckbehälter 21 mündet und mit einem anderen Ende an den Ausgangsstutzen 10 der Aufbereitungsvorrichtung 2 angeschlossen ist, und die Versorgungsleitung 9 in das Kernbohrgerät 1.

In den Poren des Filterelementes 30 lagern sich Feststoffe der vorgereinigten Schmutzflüssigkeit 29 ab, die die Filterleistung des Filterelementes 30 mit zunehmender Nutzungsdauer reduzieren. Um eine ausreichende Filtration und Reinigung der vorgereinigten Schmutzflüssigkeit 29 sicherzustellen, wird das Filterelement 30 regelmäßig ausgetauscht.

Um sicherzustellen, dass ein verbrauchtes Filterelement 30 rechtzeitig gegen ein neues Filterelement 30 ausgetauscht wird, kann die Aufbereitungsvorrichtung 2 eine Messeinrichtung **39** aufweisen, die beispielsweise die Strömungsgeschwindigkeit der recycelten Kühl- und Spülflüssigkeit 36 oder einen anderen geeigneten Messwert, der auf die Leistungsfähigkeit des Filterelementes 30 schließen lässt, ermittelt. Wenn die Strömungsgeschwindigkeit einen vordefinierten, einstellbaren Grenzwert unterschreitet, gibt eine Steuereinrichtung **40** einen entsprechenden akustischen oder optischen Warnhinweis. Reicht die Filterleistung des Filterelementes 30 nicht mehr aus und ist eine ausreichende Zufuhr von recycelter Kühl- und Spülflüssigkeit 36 zum Kernbohrgerät 1 nicht sichergestellt, schaltet die Steuereinrichtung 40 die Aufbereitungsvorrichtung 2 ab.

Zum Ausbau eines verbrauchten Filterelementes 30 löst der Bediener bei ausgeschalteter Aufbereitungsvorrichtung 2 den Deckel 23 des Überdruckbehälters 21. Das Filterelement 30 wird aus dem Überdruckbehälter 21 entnommen und über den Sondermüll entsorgt. Am Deckel des Filterelementes 30 ist ein Griff angeordnet, mit dem das Filterelement 30 einfach und ergonomisch aus dem Überdruckbehälter 21 entnommen werden kann. Dadurch, dass der Innenraum des Filterelementes 30 für den Bediener nicht zugänglich ist, kommt der Bediener nicht in Kontakt mit den Feststoffen, die sich im Innenraum des Filterelementes 30 befinden.

**Fig**. **2** zeigt eine Ausführungsform des Filterelementes 30 der in Fig. 1 gezeigten erfindungsgemäßen Aufbereitungsvorrichtung 2.

Das Filterelement 30 weist eine Filterfläche **50** auf und ist als Zylinderkörper bestehend aus einem Boden **51**, einer Mantelfläche **52** und einem Deckel **53** aufgebaut. Die Filterfläche 50 ist in der Mantelfläche 52 angeordnet. Im Bereich des Bodens 51 ist die Mantelfläche 52 für die vorgereinigte Schmutzflüssigkeit 29 undurchlässig ausgebildet. Ein Teil der in der vorgereinigten Schmutzflüssigkeit 29 enthaltenen Feststoffe setzt sich durch Sedimentation am Boden 51 des Filterelementes 30 ab. Der Deckel 53 ist an der Mantelfläche 52 befestigt und weist eine Eingangöffnung **54** für die vorgereinigte Schmutzflüssigkeit 29 auf.

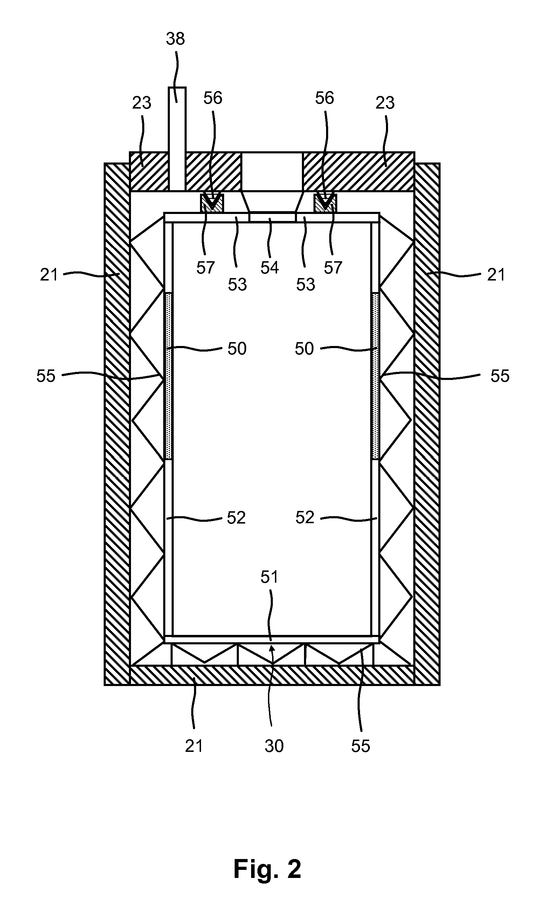

Im Überdruckbehälter 21 ist eine Halteeinrichtung **55** vorgesehen, über die das Filterelement 30 mechanisch abgestützt ist. Die Halteeinrichtung 55 ist in der Ausführung der Fig. 2 als Stützkörper ausgebildet, der mit dem Überdruckbehälter 21 mechanisch verbunden ist.

Am Deckel 23 des Überdruckbehälters 21 ist an der dem Filterelement 30 zugewandten Innenseite ein Dichtelement **56** angeordnet, das mit einem weiteren Dichtelement **57**, das am Deckel 53 des Filterelementes 30 vorgesehen ist, formschlüssig in Eingriff bringbar ist.

Die Größe der Filterfläche 50 ist so ausgewählt, dass dem Werkzeuggerät, das als Kernbohrgerät 1 ausgebildet ist, ausreichend recycelte Kühl- und Spülflüssigkeit 36 zugeführt werden kann.

## Patentansprüche

1. Vorrichtung (2) zur Aufbereitung einer Kühl- und Spülflüssigkeit aus einer Schmutzflüssigkeit (15) mit einem ersten Behälter (20), der mit einer Absaugeinrichtung (24) für die Schmutzflüssigkeit (15) zusammenwirkt und die abgesaugte Schmutzflüssigkeit (15) sammelt, einem zweiten Behälter (21), der mit einer Überdruckeinrichtung (32) zusammenwirkt, und einem Filterelement (30), das in dem zweiten Behälter (21) angeordnet ist, **dadurch gekennzeichnet, dass** das Filterelement (30) in einer Strömungsrichtung (33) vor dem zweiten Behälter (21) angeordnet ist.

2. Aufbereitungsvorrichtung nach Anspruch 1, **dadurch gekennzeichnet, dass** eine Verbindungsleitung (31) vorgesehen ist, die den ersten Behälter (20) mit dem Filterelement (30) verbindet.

3. Aufbereitungsvorrichtung nach einem der vorhergehenden Ansprüche, **dadurch gekennzeichnet, dass** das Filterelement (30) zylinderförmig mit einem Boden (51), einer Mantelfläche (52) und einem Deckel (53) ausgebildet ist, wobei in der Mantelfläche (52) zumindest eine Filterfläche (50) vorgesehen ist.

4. Aufbereitungsvorrichtung nach Anspruch 3, **dadurch gekennzeichnet, dass** der Deckel (53) unverlierbar mit der Mantelfläche (52) verbunden ist.

5. Aufbereitungsvorrichtung nach einem der Ansprüche 3 bis 4, **dadurch gekennzeichnet, dass** das Filterelement (30) als einteiliges Spritzgussteil ausgebildet ist, das um die Filterfläche (50) herum gespritzt wurde.

6. Aufbereitungsvorrichtung nach einem der vorhergehenden Ansprüche, **dadurch gekennzeichnet, dass** das Filterelement (30) mittels einer Halteinrichtung (55) mechanisch am zweiten Behälter (21) abgestützt ist.

7. Aufbereitungsvorrichtung nach Anspruch 6, **dadurch gekennzeichnet, dass** die Halteinrichtung als Stützkörper (55), der mit dem zweiten Behälter (21) verbunden ist, ausgebildet ist.
